# EUROPÄISCHE PATENTSCHRIFT

(11) **EP 1 266 552 B1**
(45) Veröffentlichungstag und Bekanntmachung des Hinweises auf die Patenterteilung: **30.10.2013**
(21) Anmeldenummer: 02013058.9
(22) Anmeldetag: 13.06.2002
(51) Int. Cl.: A01B 69/00, A01B 79/00

(54) **Einrichtung zur Positionsbestimmung eines landwirtschaftlichen Arbeitsfahrzeugs**
Agricultural working vehicle position determining device
Dispositif pour déterminer la position d'un véhicule de travail agricole

(30) Priorität: 16.06.2001 DE 10129135
(43) Veröffentlichungstag der Anmeldung: 18.12.2002
(73) Patentinhaber: DEERE & COMPANY, Moline, Illinois 61265-8098 (US)
(72) Erfinder: Beck, Folker, Dr., Bettendorf, IA 52722 (US)
(74) Vertreter: Holst, Sönke

(56) Entgegenhaltungen:
- EP-A- 0 604 404
- US-A- 5 999 126
- US-B1- 6 236 916
- PETER SCHULZE LAMMERS: "GENEAU POSITIONSBESTIMMUNG GPS MIT DIFFERENTIELLER KORREKTUR UBER RADIO DATA SYSTEM (RDS)" , LANDTECHNIK, VERLAG EDUARD F.BECKMANN KG. LEHRTE, HANNOVER, DE, VOL. 50, NR. 2, PAGE(S) 72-73 XP000494753 ISSN: 0023-8082 * das ganze Dokument *

## Beschreibung

Die Erfindung betrifft eine Einrichtung zur Positionsbestimmung eines landwirtschaftlichen Arbeitsfahrzeugs gemäß dem Oberbegriff des Anspruchs 1.

Es ist aus der WO 94/24845 A und der EP 0 821 296 A bekannt, landwirtschaftliche Arbeitsfahrzeuge anhand ihrer jeweiligen Position und eines abgespeicherten, beabsichtigten Sollwegs selbsttätig zu lenken. Die Position wird von einem Ortungssystem unter Verwendung eines Satellitensystems (GPS bzw. DGPS) erfasst. Damit im Falle eines Ausfalls des Satellitensignals das Ortungssystem weiterbetrieben werden kann, ist in der EP 0 821 296 A vorgesehen, das Arbeitsfahrzeug mit Fahrtrichtungs- und Geschwindigkeitssensoren auszustatten. Außerdem wird in beiden Schriften vorgeschlagen, die Signale des Satellitensystems durch am Arbeitsfahrzeug angebrachte Sensoren zu ergänzen, die beispielsweise eine Erntegutkante oder ein Schwad erfassen. Dazu kann gemäß der WO 94/24845 A ein Bildverarbeitungssystem oder gemäß der EP 0 821 296 A ein auf Reflexortung (z.B. Laserscanner) oder mechanischer Abtastung beruhendes Erntegut-kanten-Orientierungssystem vorgesehen sein.

Im Stand der Technik wird der lokale Fahrtrichtungs- und Geschwindigkeitssensor nur bei einem Ausfall des Satellitensystems benützt, während die Erntegutkantensensoren kontinuierlich zur Verbesserung der Genauigkeit des Positionssignals dienen. Es sind aber Fälle denkbar, in denen zwar ein Satellitensignal vorliegt, dessen Genauigkeit aber durch Laufzeitfehler, die durch nahe Hindernisse bedingt sind, nicht mehr hinreichend ist, um das Arbeitsfahrzeug hinreichend präzise zu führen. Auch ist denkbar, dass die Genauigkeit des lokalen Sensors zur Bestandskantenerkennung nicht hinreicht, um sein Positionssignal zur Verbesserung der Genauigkeit des vom Satellitensignal abgeleiteten Positionssignals zu verwenden. Derartige Fälle können von den bekannten Einrichtungen zur selbsttätigen Lenkung nicht vermieden werden.

In der als gattungsbildend angesehenen EP 0 604 404 A wird ein Navigationssystem eines Fahrzeugs beschrieben, das mit mehreren Positionssensoren ausgestattet ist, nämlich einem GPS-Empfänger, einem Trägheitsnavigationssystem und einem Odometer. Ein Prozessor kombiniert die Signale der Sensoren zu einem einzigen Positionssignal. Dabei werden die Signale der einzelnen Positionssensoren entsprechend einer vorbestimmten Genauigkeit gewichtet, die den einzelnen Positionssensoren inhärent beigemessen wird. Das hat zum Nachteil, dass beispielsweise dem GPS-Empfänger stets eine höhere Genauigkeit zugewiesen und dementsprechend seine Signale in höherem Maße berücksichtigt werden als die des Trägheitsnavigationssystems, auch wenn die GPS-Signale aufgrund schlechter Empfangsbedingungen (z. B. Abschattung durch Bäume o. dgl.) eine schlechtere Genauigkeit als die des Trägheitsnavigationssystems aufweisen. Dadurch ist die erzielte Genauigkeit nicht immer optimal.

Die US 5 951 613 A beschreibt eine mit mehreren GPS-Empfängern und einem Trägheitsnavigationssystem ausgestattete Baumaschine. Die Signale der GPS-Empfänger werden nur berücksichtigt, wenn sie gültig sind, d. h. Signale überhaupt vorliegen. Hier erfolgt keine Wichtung der Signale anhand der Qualität.

Die der Erfindung zugrunde liegende Aufgabe wird darin gesehen, eine verbesserte Einrichtung zur Positionsbestimmung eines landwirtschaftlichen Arbeitsfahrzeugs bereitzustellen, die sich auch bei ungünstigen Bedingungen durch hohe Genauigkeit auszeichnet.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das erste Positionssignal und das zweite Positionssignal werden durch separate Sensoren unabhängig voneinander erzeugt und der Auswertungseinrichtung zugeführt. Als erstes Positionssignal dient ein durch Satellitensignale erzeugtes Signal, das beispielsweise mittels einer entsprechenden Antenne, die mit dem GPS (Global Positioning System) oder einem anderen Satellitensystem zusammenwirkt, erzeugt werden kann. Das zweite Positionssignal wird durch einen lokalen Sensor an dem landwirtschaftlichen Arbeitsfahrzeug erzeugt. Der lokale Sensor erfasst die Position des Arbeitsfahrzeugs relativ zu einem ortsfesten Objekt, bei dem es sich um eine Bearbeitungsgrenze handelt. Derartige Sensoren sind in Form von Bildverarbeitungssystemen, Laserabtastsensoren oder mechanischen Tastvorrichtungen zur Erfassung von Erntegutreihen, wie sie zur automatischen Lenkung von Erntemaschinen verwendet werden, hinlänglich bekannt. Es besteht auch die Möglichkeit, einen Laser-Entfernungssensor zu verwenden, bei dem nicht der Sender und/oder Empfänger gedreht wird, sondern ein stufenlos bzw. in Stufen rotierender Spiegel zur Abtastung des Sichtbereichs dient. Er kann einen Winkelbereich von bis zu 180° abtasten. Derartige Sensoren sind von der Fa. Sick AG, D-72796 Reute unter der Bezeichnung LMS erhältlich. Auch Sensoren zur Schneidbreitenmessung an Schneidwerken können verwendet werden. Außerdem liegt der Auswertungseinrichtung eine Qualitätsinformation vor, die darauf hinweist, welche Genauigkeit beide Positionssignale aufweisen. Die Auswertungseinrichtung berücksichtigt die Positionssignale des ersten und des zweiten Positionssensors bei der Bestimmung der Position anhand der der Auswertungseinrichtung vorliegenden Qualitätsinformation gewichtet. Weist die Qualitätsinformation auf eine hohe Genauigkeit des ersten Positionssignals hin, wird ersteres ausschließlich oder zumindest zu einem hohen Anteil beim Berechnen der Position berücksichtigt. Das zweite Positionssignal wird nur zu einem kleinen Anteil oder überhaupt nicht berücksichtigt. Analog wird das erste Positionssignal ignoriert oder nur zu einem kleinen Teil berücksichtigt, wenn die Qualitätsinformation auf eine geringe Genauigkeit des ersten Positionssignals hinweist. Bei etwa mittlerer Genauigkeit des ersten Positionssignals können das erste und das zweite Positionssignal gleichgewichtet berücksichtigt werden. Die Qualitätsinformation des ersten Positionssensors wird aus der Anzahl der derzeit empfangenen Satelliten und der Amplitude der vom ersten Positionssensor empfangenen Signale abgeleitet. Die Qualitätsinformation des zweiten Positionssensors wird aus der Größe der Änderung des vom Empfänger des zweiten Positionssensors aufgenommenen Signals an der Bestandskante abgeleitet.

Auf diese Weise wird durch Berücksichtigung der jeweiligen Messgenauigkeit der Positionssignale die aktuelle Position in zuverlässiger und exakter Weise bestimmt. Die Erfindung kann in Verbindung mit einer selbsttätigen Lenkeinrichtung benutzt werden, aber beispielsweise auch, um Positionssignale für eine Ertragskartierung zu erzeugen.

Die Erfindung wird vorzugsweise bei einer Einrichtung zur selbsttätigen Lenkung eines landwirtschaftlichen Arbeitsfahrzeugs eingesetzt. Die Auswertungseinrichtung erzeugt anhand der ermittelten Position und einer Sollweginformation, die den zurückzulegenden Weg definiert, ein Lenksignal, welches einer selbsttätigen Lenkeinrichtung des Arbeitsfahrzeugs zugeführt wird.

Es wird außerdem vorgeschlagen, die Qualitätsinformation zur Auswahl der Sollweginformation aus mehreren möglichen Sollweginformationen zu verwenden. Entsprechend der aus der Qualitätsinformation ableitbaren Genauigkeit des Positionssignals eines der Positionssensoren wird die geeignete, zweckmäßigerweise die am besten mit dem Positionssignal des Positionssensors kombinierbare Sollweginformation ausgewählt. Beispielsweise wäre es denkbar, das Arbeitsfahrzeug bei hinreichender Genauigkeit eines mit einem ortsfesten Objekt, z. B. einer Bearbeitungsgrenze zusammenwirkenden Positionssignals entlang des Objekts (Bearbeitungsgrenze) zu steuern. In diesem Fall entspricht die Sollweginformation der beabsichtigten Position des Arbeitsfahrzeugs relativ zur Bearbeitungsgrenze. Eine im Vorab erzeugte digitale Karte der zu bearbeitenden Fläche ist nicht erforderlich. Weist die Qualitätsinformation darauf hin, dass die Genauigkeit dieses Positionssignals nicht (mehr) hinreichend ist, kann die Auswertungseinrichtung die Sollweginformation selbsttätig aus dem bisher zurückgelegten Weg, über den (in der Art einer Lernfahrt) entsprechende Positionsinformationen in Form einer Karte aufgezeichnet wurden, ableiten. Die Lenkung erfolgt dann anhand des Signals eines anderen Positionssensors. Die Sollwertinformation entspricht nunmehr der Karte, die den zurückzulegenden Weg definiert. Ergibt sich später anhand der Qualitätsinformation, dass die Genauigkeit des die Bearbeitungsgrenze erfassenden Positionssignals wieder hinreicht, kann letzteres wieder zur Lenkung der Arbeitsmaschine verwendet werden. Analog ist denkbar, die Arbeitsmaschine in der Regel satellitengestützt anhand einer abgespeicherten Karte zu lenken und bei Ausfall des Satellitensignals einen Bestandskantensensor und einen Geschwindigkeitssensor zur Erzeugung des Lenksignals zu verwenden. Es wird möglich, als Sollweginformation nicht unbedingt eine aufwändig zu erzeugende, im Vorab abgespeicherte Karte, sondern relativ einfach zu gewinnende Informationen zu verwenden, z.B. die gewünschte Lage einer Bearbeitungsgrenze oder eine Information über einen zurückgelegten Weg.

In den Zeichnungen ist ein nachfolgend näher beschriebenes Ausführungsbeispiel der Erfindung dargestellt. Es zeigt:
- Fig. 1: ein landwirtschaftliches Arbeitsfahrzeug mit einer erfindungsgemäßen Einrichtung zur selbsttätigen Lenkung,
- Fig. 2: eine Draufsicht auf das Arbeitsfahrzeug beim Abernten eines Felds, und
- Fig. 3: ein Flussdiagramm, nach dem die Auswertungseinrichtung arbeitet.

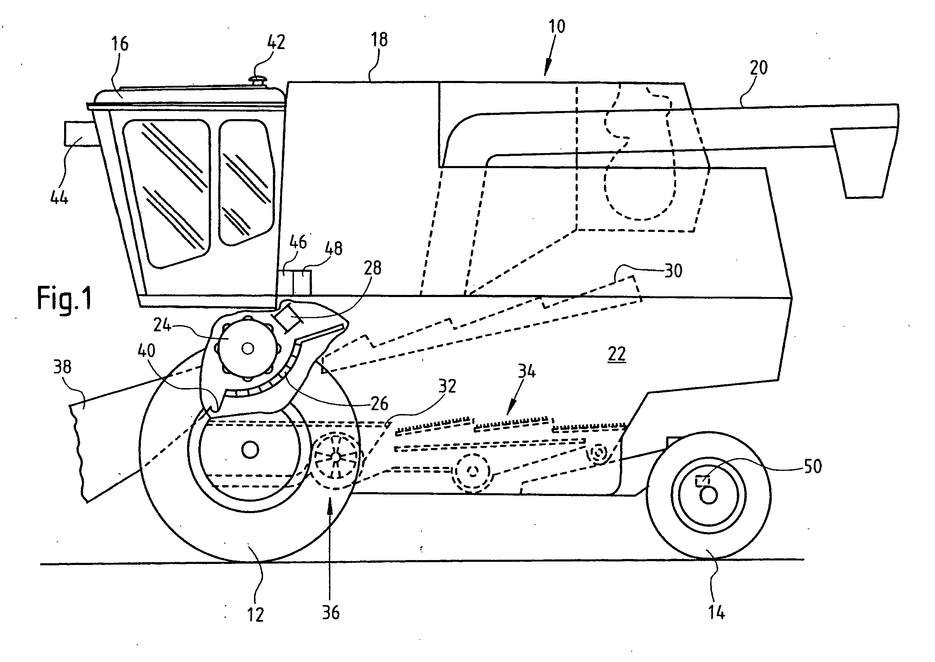

Ein in Figur 1 gezeigtes landwirtschaftliches Arbeitsfahrzeug 10 in der Form eines Mähdreschers ist auf vorderen angetriebenen und rückwärtigen lenkbaren Rädern 12 bzw. 14 getragen und weist eine Fahrerkabine 16 auf, von der aus es von einem Fahrer bedient werden kann. Anstatt eines Mähdreschers könnte ebenso ein Feldhäcksler, eine selbstfahrende Großballenpresse, ein Traktor mit einem Bodenbearbeitungsgerät oder einer Sämaschine in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

An der Oberseite der. Fahrerkabine 16 ist ein erster Positionssensor 42 angeordnet, bei dem es sich um eine Antenne zum Empfang von GPS-Signalen handelt.

An der Vorderseite der Fahrerkabine 16 befindet sich ein zweiter Positionssensor 44, der einen Laserstrahl aussendet, welcher in Vorwärtsfahrtrichtung etwa 10 m vor der selbstfahrenden Arbeitsmaschine 10 den Erdboden erreicht, dort (zumindest teilweise) reflektiert wird und von einem Empfänger des Positionssensors 44 registriert wird. Anhand der Laufzeit des Laserstrahls wird die Entfernung zum Reflexionspunkt bestimmt. Der zweite Positionssensor 44 wird um eine näherungsweise vertikale Achse verschwenkt, um einen Bereich quer zur Vorwärtsbewegungsrichtung abzurastern. Das Signal des Empfängers ermöglicht, den Winkel zwischen der Vorwärtsfahrtrichtung und der Position einer Bestandsgrenze festzustellen. Derartige Positionssensoren 44 sind an sich bekannt und beispielsweise in der DE 197 43 884 A, EP 0 878 121 A und EP 0 887 660 A beschrieben, deren Offenbarung durch Verweis hierin mit aufgenommen wird.

Der erste Positionssensor 42 und der zweite Positionssensor 44 sind über einen Bus mit einer Auswertungseinrichtung 46 verbunden, die auch mit einer Speichereinrichtung 48 verbunden ist. Die Auswertungseinrichtung 46 ist eingerichtet, eine Lenkeinrichtung 50 mit einem Lenksignal zu versorgen. Die Lenkeinrichtung 50 dient zur automatischen Einstellung des Lenkwinkels der rückwärtigen lenkbaren Räder 14.

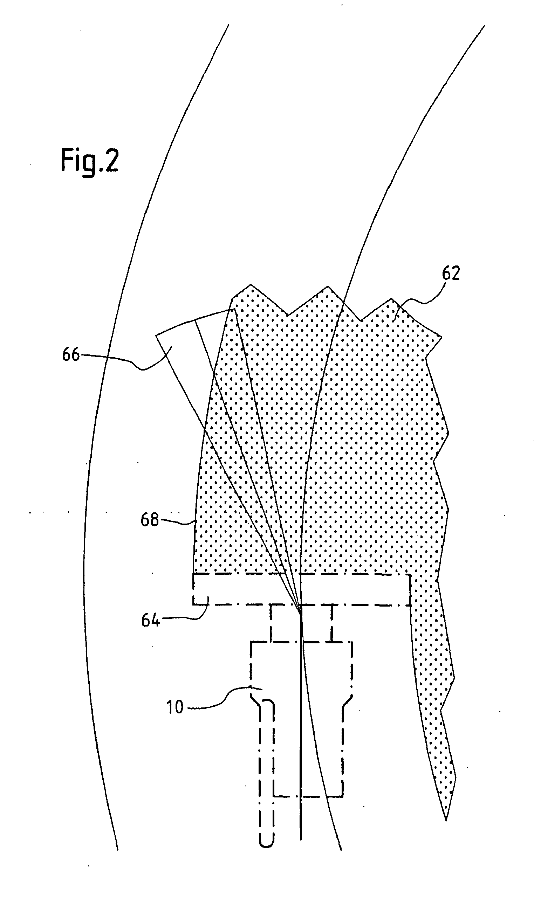

In Figur 2 ist eine Draufsicht auf das Arbeitsfahrzeug 10 beim Abernten eines Felds dargestellt. Die Erntegutbergungseinrichtung 64 ist ein Schneidwerk, das die Pflanzen (Getreide) vom Feld aberntet. Das Bezugszeichen 68 kennzeichnet die Bearbeitungsgrenze zwischen dem abgeernteten Bereich des Felds und den noch abzuerntenden Pflanzen 62. Der vom Abtastsensor 44 überstrichene Winkelbereich ist mit dem Bezugszeichen 66 versehen. Es ist erkennbar, dass der rechte Endbereich des Winkelbereichs 66 die Bearbeitungsgrenze 68 überdeckt. Außerdem ist ersichtlich, dass eine Zeitverzögerung zwischen der Messung der Position der Bearbeitungsgrenze 68 und dem Zeitpunkt, an dem das Arbeitsfahrzeug den gemessenen Punkt erreicht, vorliegt, der bei der Ansteuerung der Lenkeinrichtung 50 zu berücksichtigen ist.

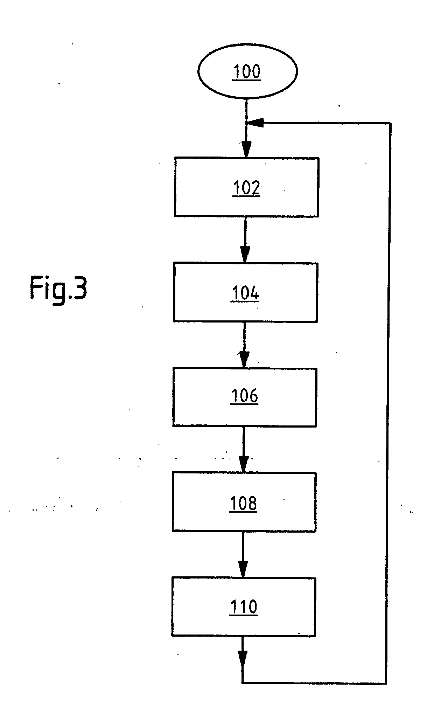

Figur 3 zeigt ein Flussdiagramm, nach dem die Auswertungseinrichtung 46 arbeitet.

Nach dem Start in Schritt 100 folgt Schritt 102, in dem das (erste) Positionssignal des ersten Positionssensors 42 empfangen wird. Ein Problem besteht darin, dass die Signale eines Satellitensystems abhängig von den äußeren Bedingungen unterschiedliche Genauigkeiten aufweisen können. So kann es bei Arbeitsflächen mit begrenztem Sichtbereich zum Himmel problematisch sein, hinreichend viele GPS-Satelliten oder bei Verwendung von DGPS Korrektursignale zu empfangen. In der Nähe des Arbeitsfahrzeugs befindliche Hindernisse wie Gebäude oder Bäume erzeugen Laufzeitfehler, welche die Genauigkeit beeinträchtigen. Gemeinsam mit dem Positionssignal übersendet deshalb der erste Positionssensor eine Information über die Qualität bzw. Genauigkeit des ersten Positionssignals, die aus der Anzahl der derzeit empfangenen GPS-Satelliten und der Amplitude (Feldstärke) der vom ersten Positionssensor 42 empfangenen Signale abgeleitet wird. Die an die Auswertungseinrichtung 42 übermittelte erste Qualitätsinformation ist somit ein Maß, wie genau bzw. zuverlässig das erste Positionssignal ist.

Im folgenden Schritt 104 empfängt die Auswertungseinrichtung 46 ein zweites Positionssignal vom zweiten Positionssensor 44. Das zweite Positionssignal enthält eine Information, welchen Winkel die Längsachse des Arbeitsfahrzeugs 10 mit der Bestandskante des derzeit abgeernteten Felds einschließt. Optische Sensoren zur Schwad- oder Bestandskantenerkennung können beispielsweise bei staubiger Luft oder Nebel weniger genau als bei klarer Sicht arbeiten. In derartigen Fällen würde eine Berücksichtigung des Ausgangssignals der Sensoren, die zwar noch ein Signal liefern, das jedoch nicht hinreichend exakt ist, die Genauigkeit der Lenkung in nachteiliger Weise beeinflussen. Auch besteht die Möglichkeit, dass die Bearbeitungsgrenze aus dem Sichtbereich des zweiten Positionssensors 44 gelangt ist, was beispielsweise bei einer Kurvenfahrt (s. Figur 2), bei Lagergetreide oder am Vorgewende der Fall sein kann. Manchmal liegen auch zwei Kanten als mögliche Bearbeitungsgrenzen vor. Wenn eine Identifikation der richtigen Kante nicht möglich ist, ist das Positionssignal des zweiten Positionssensors 44 ebenfalls unbrauchbar. Aus diesem Grunde erhält die Auswertungseinrichtung 46 eine zweite Qualitätsinformation, die aus der Größe der Änderung des vom Empfänger des zweiten Positionssensors 44 aufgenommenen Signals an der Bestandskante abgeleitet wird. Je größer die Änderung des Signals an der Bestandskante ist, umso genauer wird die Messung des Winkels sein, unter dem die Bestandskante liegt.

Im Schritt 106 wird die aktuelle Position des Arbeitsfahrzeugs 10 aus dem ersten Positionssignal und dem zweiten Positionssignal errechnet. Das zweite Positionssignal enthält eine Information über die Position des Arbeitsfahrzeugs 10 relativ zur Bestandskante, deren Genauigkeit im Zentimeterbereich liegt. Da die Arbeit auf dem Feld normalerweise in parallelen Wegen mit einem bearbeitungswerkzeugspezifischen Versatz erfolgt, kann die Lage der Bestandskante von vorherigen Überquerungen des Felds, bei denen die Position der Arbeitsmaschine 10 in der Speichereinrichtung abgespeichert wurde, vorherberechnet werden. Anhand der vorherberechneten Lage der Bestandskante und der mit dem zweiten Positionssensor gemessenen Position des Arbeitsfahrzeugs 10 relativ zu ihr kann das zweite Positionssignal zur Verbesserung der Genauigkeit des ersten Positionssignals herangezogen werden. Die Position des Arbeitsfahrzeugs 10 wird unter Berücksichtigung der Fahrtrichtung und -geschwindigkeit und der durch die Zeit, die die Arbeitsmaschine 10 benötigt, mit dem ersten Positionssensor 42 den Ort zu erreichen, den der zweite Positionssensor 44 erfasst, bedingten Verzögerung zwischen den Signalen des ersten Positionssensors 42 und zweiten Positionssensors 44 bestimmt. Dabei erfolgt eine Berücksichtigung der beiden Positionssignale in einem Maß, das von den beiden Qualitätsinformationen abhängt. Je besser die Qualität eines der Signale relativ zum anderen Signal ist, umso stärker wird es berücksichtigt.

Im folgenden Schritt 108 wird basierend auf der ermittelten Position und einer in der Speichereinrichtung 48 abgelegten Karte, die den von der Arbeitsmaschine 10 auf dem Feld zurückzulegenden Sollweg definiert, ein Lenksignal erzeugt und der Lenkeinrichtung 50 zugeführt. Denkbar wäre aber auch, dass Lenksignal nur auf dem zweiten Positionssignal basierend zu generieren, insbesondere bei Ausfall des ersten Positionssignals, und die von der Auswertungseinrichtung 46 erzeugte Positionsinformation nur zur Aufzeichnung des zurückgelegten Wegs zu verwenden. Im Schritt 110 veranlasst die Auswertungseinrichtung 46, dass die in Schritt 106 berechnete Positionsinformation in der Speichereinrichtung 48 abgelegt wird. Auf Schritt 110 folgt wieder Schritt 102.

## Patentansprüche

1. Einrichtung zur Positionsbestimmung eines landwirtschaftlichen Arbeitsfahrzeugs (10), mit:
einem ersten Positionssensor (42), der ein erstes Positionssignal erzeugt, welches eine Information über die derzeitige Position des Arbeitsfahrzeugs (10) enthält und durch ein Satellitensignal erzeugt wird,
einem zweiten Positionssensor (44), der ein zweites Positionssignal erzeugt, welches eine Information über die derzeitige Position des Arbeitsfahrzeugs (10) enthält und durch einen am Arbeitsfahrzeug (10) angebrachten lokalen, zweiten Positionssensor (44) erzeugt wird,
einer Auswertungseinrichtung (46), die mit dem ersten Positionssignal und dem zweiten Positionssignal beaufschlagt wird und zur Berechnung der jeweiligen Position des Arbeitsfahrzeugs (10) eingerichtet ist,
wobei der Auswertungseinrichtung (46) eine Qualitätsinformation über die Qualität beider Positionssignale vorliegt und die Auswertungseinrichtung (46) bei der Berechnung der Position das erste Positionssignal und das zweite Positionssignal entsprechend der Qualitätsinformation gewichtet berücksichtigt,
**dadurch gekennzeichnet, dass** die Qualitätsinformation des ersten Positionssensors (42) aus der Anzahl der derzeit empfangenen Satelliten und der Amplitude der vom ersten Positionssensor (42) empfangenen Signale abgeleitet wird,
dass der zweite Positionssensor (44) eingerichtet ist, die Position des Arbeitsfahrzeugs (10) relativ zu einer Bestandskante zu erfassen, und
dass die Qualitätsinformation des zweiten Positionssensors (44) aus der Größe der Änderung des vom Empfänger des zweiten Positionssensors (44) aufgenommenen Signals an der Bestandskante abgeleitet wird.

2. Einrichtung nach Anspruch 1, **dadurch gekennzeichnet, dass** die Auswertungseinrichtung (46) mit einer Sollweginformation beaufschlagt wird, die eine Information über den Weg enthält, den das Arbeitsfahrzeug (10) auf einem Feld zurücklegen soll und einer Lenkeinrichtung (50) des Arbeitsfahrzeugs (10) ein aus der Sollweginformation und der jeweiligen Position abgeleitetes Lenksignal zuführt.

3. Einrichtung nach Anspruch 2, **dadurch gekennzeichnet, dass** die Auswertungseinrichtung (46) die Sollweginformation anhand der Qualitätsinformation unter mehreren möglichen Sollwertinformationen auswählt.

4. Einrichtung nach Anspruch 3, **dadurch gekennzeichnet, dass** die Auswertungseinrichtung (46) die Sollweginformation unter einer abgespeicherten Karte und/oder der Position der Arbeitsmaschine (10) relativ zu einem ortsfesten Objekt, wie einer Bearbeitungsgrenze und/oder dem zuvor zurückgelegten Weg auswählt.

5. Landwirtschaftliches Arbeitsfahrzeug (10), insbesondere Erntemaschine, umfassend eine Einrichtung nach einem der vorhergehenden Ansprüche.

## Claims

1. Device for determining the position of an agricultural working vehicle (10), comprising:
a first position sensor (42) which generates a first position signal which contains information about the current position of the working vehicle (10) and is generated by a satellite signal,
a second position sensor (44) which generates a second position signal which contains information about the current position of the working vehicle (10) and is generated by a local, second position sensor (44) which is mounted on the working vehicle (10),
an evaluation device (46) which is supplied with the first position signal and the second position signal and is configured to calculate the respective position of the working vehicle (10),
wherein quality information about the quality of the two position signals is made available to the evaluation device (46), and the evaluation device (46) takes into account, during the calculation of the position, the first position signal and the second position signal, weighted according to the quality information,
**characterized in that** the quality information of the first position sensor is derived from the number of currently received satellites and the amplitude of the signals received by the first position sensor (42),
**in that** the second position sensor (44) is configured to detect the position of the working vehicle (10) relative to a crop edge, and
**in that** the quality information of the second position sensor (44) is derived from the size of the change in the signal, picked up by the receiver of the second position sensor (44), at the crop edge.

2. Device according to Claim 1, **characterized in that** the evaluation device (46) is supplied with reference route information which contains information about the route which the working vehicle (10) is intended to travel along in a field, and feeds to a steering device (50) of the working vehicle (10) a steering signal which is derived from the reference route information and from the respective position.

3. Device according to Claim 2, **characterized in that** the evaluation device (46) selects the reference route information on the basis of the quality information among a plurality of possible reference value information items.

4. Device according to Claim 3, **characterized in that** the evaluation device (46) selects the reference route information from a stored map and/or the position of the working machine (10) relative to a fixed object, such as a processing boundary and/or the route previously travelled along.

5. Agricultural working vehicle (10), in particular harvesting machine, comprising a device according to one of the preceding claims.

## Revendications

1. Dispositif de détermination de la position d'un engin de travaux agricoles (10), comprenant :
un premier capteur de position (42) générant un premier signal de position qui contient une information concernant la position présente de l'engin de travaux (10) et est généré par l'intermédiaire d'uns signal de satellite,
un second capteur de position (44) générant un second signal de position qui contient une information concernant la position présente de l'engin de travaux (10) et est généré par l'intermédiaire d'un second capteur de position (44) local monté sur l'engin de travaux (10),
un dispositif d'évaluation (46) auquel sont fournis le premier signal de position et le second signal de position et qui est conçu pour calculer la position respective de l'engin de travaux (10),
dans lequel une information de qualité concernant la qualité des deux signaux de position est fournie au dispositif d'évaluation (46) et le dispositif d'évaluation (46), lors du calcul de la position, prend en compte de manière pondérée en fonction de l'information de qualité le premier signal de position et le second signal de position,
**caractérisé en ce que** l'information de qualité du premier capteur de position (42) est déduite du nombre des satellites reçus à l'instant présent et de l'amplitude des signaux reçus par le premier capteur de position (42),
**en ce que** le second capteur de position (44) est conçu pour détecter la position de l'engin de travaux (10) par rapport au bord de la récolte, et
**en ce que** l'information de qualité du second capteur de position (44) est déduite de l'amplitude de la modification du signal acquis par le récepteur du second capteur de position (44) au bord de la récolte.

2. Dispositif selon la revendication 1, **caractérisé en ce qu'**il est fourni au dispositif d'évaluation (46) une information d'itinéraire nominal qui contient une information concernant l'itinéraire que doit parcourir l'engin de travaux (10) sur un champ et **en ce qu'**il est fourni à un dispositif de direction (50) de l'engin de travaux (10) un signal de direction déduit de l'information d'itinéraire nominal et de la position respective.

3. Dispositif selon la revendication 2, **caractérisé en ce que** le dispositif d'évaluation (46) sélectionne l'information d'itinéraire nominal sur la base de l'information de qualité lorsqu'il existe une pluralité d'informations de valeurs nominales possibles.

4. Dispositif selon la revendication 3, **caractérisé en ce que** le dispositif d'évaluation (46) sélectionne l'information d'itinéraire nominal conformément à une carte mémorisée et/ou à la position de l'engin de travaux (10) par rapport à un objet en position fixe telle qu'une limite de la zone de travail et/ou l'itinéraire précédemment parcouru.

5. Engin de travaux agricoles (10), notamment une moissonneuse comprenant un dispositif selon l'une quelconque des revendications précédentes.
